# EUROPÄISCHE PATENTANMELDUNG

(11) **EP 1 985 974 A2**
(43) Veröffentlichungstag der Anmeldung: **29.10.2008**
(21) Anmeldenummer: 08003089.3
(22) Anmeldetag: 20.02.2008
(51) Int. Cl.: G01F 1/66, G01F 15/02

(54) **Verfahren zur Bestimmung einer Eigenschaft eines strömenden Mediums**

(30) Priorität: 27.04.2007 DE 102007020491
(71) Anmelder: Hydrometer GmbH, 91522 Ansbach (DE); Universität Paderborn, 33098 Paderborn (DE)
(72) Erfinder: Rautenberg, Jens, 33104 Paderborn (DE); Unverzagt, Carsten, 33181 Bad Wünneberg (DE); Dietz, Gerhard, 91568 Lichtenau (DE); Gaugler, Ulrich, 91746 Weidenbach (DE); Ziegler, Horst, Prof. Dr., 33100 Paderborn (DE); Henning, Bernd Prof., 33175 Bad Lippspringe (DE); Kehl, Romina, 33098 Paderborn (DE)
(74) Vertreter: Stippl, Hubert

(57) **Zusammenfassung**

Die Erfindung betrifft ein Verfahren zur Bestimmung einer Eigenschaft eines strömenden Mediums, insbesondere einer Flüssigkeit oder eines Gases wobei es sich bei der Eigenschaft insbesondere um den Durchfluss, das Volumen, die Konzentration, die Wärmemenge oder die Dichte handelt, unter Verwendung mindestens eines piezoelektrischen Wandlers. Das Verfahren ist dadurch gekennzeichnet, dass aus der Temperaturabhängigkeit mindestens eines physikalischen Parameters des piezoelektrischen Wandlers die Temperatur des Mediums abgeleitet wird und der daraus abgeleitete Wert dem Verfahren zur Bestimmung der Eigenschaft des strömenden Mediums als Variable zugeführt wird. Außerdem betrifft die Erfindung einen Ultraschallzähler unter Einsatz des vorgenannten Verfahrens.

## Beschreibung

Die vorliegende Erfindung betrifft ein Verfahren zur Bestimmung einer Eigenschaft eines strömenden Mediums, insbesondere einer Flüssigkeit oder eines Gases wobei es sich bei der Eigenschaft insbesondere um den Durchfluss, das Volumen, die Konzentration, die Wärmemenge oder die Dichte handelt, unter Verwendung mindestens eines piezoelektrischen Wandlers, wobei der Wandler in Kälte- bzw. Wärmekontakt mit dem Medium steht, so dass Wärme/Kälte vom Medium auf den Wandler übertragbar ist. Des Weiteren betrifft die vorliegende Erfindung einen Ultraschallzähler zur Bestimmung des Durchflusses oder Volumens eines strömenden Mediums, insbesondere einer Flüssigkeit oder eines Gases, mit mindestens einem piezoelektrischen Wandler zur Laufzeitmessung.

Bei der Durchflussmessung fluider Medien wie z. B. Wasser werden häufig Ultraschallmessverfahren eingesetzt. Mittels Ultraschallwandler werden Ultraschallsignale erzeugt, die eine Messstrecke in beiden Richtungen durchlaufen. Aus der Laufzeitdifferenz wird die Strömungsgeschwindigkeit ermittelt. Hierzu muss ein vorbestimmter Puls eines Schallbursts einschließlich der genauen Lage des Empfangsfensters zur exakten Bestimmung der Laufzeit ausgewählt werden. Die Schallgeschwindigkeit ist jedoch abhängig von der Temperatur des die Schallwelle durchlaufenden Mediums. Infolgedessen ist es bisher notwendig gewesen, neben der Schalllaufzeitdifferenzermittlung mittels eines Temperatursensors die Temperatur des Mediums zu bestimmen, um ein bezüglich der Temperaturabhängigkeit der Schallgeschwindigkeit korrigiertes Ergebnis zu erhalten. Demzufolge mussten Temperaturfühler installiert werden, die einerseits in einem guten thermischen Kontakt zu Medien stehen mussten, andererseits hohen Anforderungen bezüglich mechanischer Festigkeit, insbesondere Druckstoßfestigkeit sowie Dichtheit genügen mussten. Herkömmliche Volumen- oder Durchflussmessgeräte begründeten bisher deshalb erhebliche Bauelemente- und Montagekosten.

Die Aufgabe der vorliegenden Erfindung besteht darin, ein gattungsgemäßes Verfahren zur Verfügung zu stellen, mit dem die Bauelemente- und Montagekosten von Volumen- und Durchflussmessgeräten erheblich reduziert werden können. Ferner besteht die Aufgabe der vorliegenden Erfindung darin, einen Ultraschallzähler mit reduzierten Bauelemente- und Montagekosten anzubieten.

Die vorstehende Aufgabe wird bei dem gattungsgemäßen Verfahren dadurch gelöst, dass aus der Temperaturabhängigkeit mindestens eines physikalischen Parameters des piezoelektrischen Wandlers die Temperatur des Mediums abgeleitet wird und der daraus abgeleitete Wert dem Verfahren zur Bestimmung der Eigenschaft des strömenden Mediums als Variable zugeführt wird. Gemäß der Erfindung wird der piezoelektrische Wandler, der sich ohnehin im Kontakt mit dem Medium befindet, als Mittel zur Erfassung der Temperatur des Mediums genutzt. Eine Installation eines zusätzlichen Temperaturfühlers, z.B. Thermoelements, wird damit überflüssig. Die Bauelemente- und Montagekosten können erheblich reduziert werden.

Die Aussendung und/oder der Empfang eines Ultraschallsignals zur Laufzeitdifferenzmessung sowie die Ableitung der Temperatur aus einer physikalischen Eigenschaft des piezoelektrischen Wandlers kann vorteilhaft an ein und demselben Wandler vorgenommen werden. Die bestehende Installation wird somit optimal genutzt. Der Wandler kann im Bezug auf seinen Messmodus in einfacher Weise umgeschaltet werden.

Des Weiteren kann die Ableitung der Temperatur an mindestens zwei Ultraschallwandlern erfolgen und aus den sich daraus ergebenden Werten ein einziger, resultierender Wert abgeleitet werden. Dies führt zu einer noch höheren Genauigkeit.

Die Temperaturerfassung kann weniger häufig als die Aussendung oder Erfassung eines Ultraschallsignals zur Laufzeitmessung erfolgen, da sich die Temperatur nicht kurzzeitig in großen Sprüngen ändert. Deshalb können die Messmodi in vorteilhafter Weise an ein und demselben Ultraschallwandler oder der Ultraschallwandlergruppe vorgenommen werden.

Zweckmäßigerweise ist die Häufigkeit des jeweiligen Messmodus veränderbar. Dies geschieht beispielsweise durch Veränderung der Umschaltfrequenz eines Schalters.

Zweckmäßigerweise wird als physikalischer Parameter des piezoelektrischen Wandlers sein Resonanzverhalten erfasst und dessen Temperaturabhängigkeit ausgewertet.

Vorzugsweise wird hierzu eine der Nebenresonanzfrequenzen, insbesondere die Radialresonanzfrequenz ausgewählt. Die Schwingung bei der Radialresonanz erfolgt in der Ebene gemäß der Längsrichtung des Wandlers, wodurch sich ein besonders guter Messeffekt und daraus eine besonders gute Reproduzierbarkeit ergeben.

Als Radialresonanzfrequenz wird insbesondere die Serienresonanz und/oder die Parallelresonanz zur Auswertung herangezogen, da hierdurch besonders reproduzierbare Werte erzielbar sind.

Hierbei können vorzugsweise bei der Serienresonanzauswertung die elektrische Impedanz, insbesondere die Lage und/oder der Wert des Betragsminimums der elektrischen Impedanz, bei der Parallelresonanzauswertung die Lage und/oder der Wert des Betragsmaximums der elektrischen Impedanz oder der Nulldurchgang der Phase der elektrischen Impedanz oder bei der Serienresonanzauswertung die Frequenz der höchsten Stromamplitude bzw. geringsten Spannungsamplitude oder bei der Parallelresonanzauswertung die Frequenz der geringsten Stromamplitude bzw. höchsten Spannungsamplitude ausgewertet werden.

Vorzugsweise kann auch eine Kombination der vorgenannten Auswertungen erfolgen.

Die betreffenden temperaturabhängigen Werte werden mit in die Ermittlung der Laufzeitdifferenz einbezogen.

Gemäß einer alternativen Ausgestaltung der vorliegenden Erfindung kann als physikalischer Parameter auch die Kapazität des piezoelektrischen Wandlers erfasst und dessen Temperaturabhängigkeit ausgewertet werden. Hierbei handelt es sich um eine schaltungstechnisch besonders einfach zu realisierende Ausgestaltung.

Die eingangs genannte Aufgabe wird in Bezug auf den Ultraschallzähler gemäß dem Oberbegriff des Anspruchs 14 dadurch gelöst, dass der piezoelektrische Wandler als Mittel zur Bestimmung der Temperatur des Mediums dient. Der Wandler stellt somit gleichsam einen Temperatursensor dar.

Zweckmäßigerweise umfasst der Ultraschallzähler neben einer ersten Baugruppe zur Laufzeitbestimmung eine weitere Baugruppe zur Ermittlung mindestens eines temperaturabhängigen physikalischen Parameters des piezoelektrischen Wandlers.

Die zweite Baugruppe beinhaltet als Bestandteil vorzugsweise eine Einrichtung, die den piezoelektrischen Wandler zu einer Schwingung anregt, so dass dieser mit einer bestimmten Frequenz schwingt. Diese Frequenz ist temperaturabhängig und kann ausgewertet werden.

Hierzu kann vorzugsweise ein Oszillatorschaltkreis mit dem piezoelektrischen Wandler als die Resonanzfrequenz bestimmendes Element vorgesehen sein. Ein Oszillator ist hierbei zur Anregung des piezoelektrischen Wandlers vorgesehen. Der Oszillatorschaltkreis umfasst ferner eine Einrichtung, mittels der die gewünschte Resonanzfrequenz zur Ermittlung der Temperaturabhängigkeit ausgewählt werden kann.

Weiter umfasst von der zweiten Baugruppe dieser Ausgestaltung ist eine Einrichtung, mittels welcher die Frequenz und/oder Periodendauer der angeregten Schwingung des Ultraschallwandlers bestimmbar und Rückschlüsse für die Temperaturabhängigkeit daraus erzielbar sind.

Eine weitere Ausgestaltung der vorliegenden Erfindung zur Erfassung des Resonanzverhaltens des Wandlers umfasst eine Frequenzsendeeinheit, insbesondere einen frequenzeinstellbaren Generator als Teil der zweiten Baugruppe. Die Frequenzsendeeinheit dient dazu, den Wandler mit auszuwählenden Frequenzen zu beaufschlagen.

Bei der obigen Ausgestaltung wird die Temperaturabhängigkeit unter Zuhilfenahme einer Einrichtung zur Messung der Spannung und/oder des Stroms am Wandler gemessen.

Eine weitere alternative Ausgestaltungsform der vorliegenden Erfindung ist dadurch gekennzeichnet, dass die zweite Baugruppe als Mittel zur Bestimmung der Temperatur eine Einrichtung zur Erfassung der Kapazität aufweist. Hierbei wird nicht das Schwingungsverhalten des Wandlers ausgewertet, sondern die ebenfalls von der Temperatur abhängige Kapazität.

Vorteilhaft ist es auch, wenn eine Schaltung vorgesehen ist, in der mehrere physikalische Parameter zur Ermittlung des Temperatureinflusses auswertbar sind.

Schließlich ist auch eine Einrichtung vorgesehen, die dazu dient, aus den temperaturabhängigen, physikalischen Eigenschaften des Wandlers eine der Temperatur entsprechende Größe für die weitere Auswertung zu erhalten.
- Fig. 1: eine Prinzipschaltbilddarstellung unter Verwendung einer Oszillatorschaltung,
- Fig. 2: eine Prinzipschaltbilddarstellung unter Verwendung einer Einrichtung zur Beaufschlagung des piezoelektrischen Wandlers mit einer Zwangsfrequenz sowie
- Fig. 3: eine Prinzipschaltbilddarstellung zur Ermittlung der Kapazität des piezoelektrischen Wandlers.

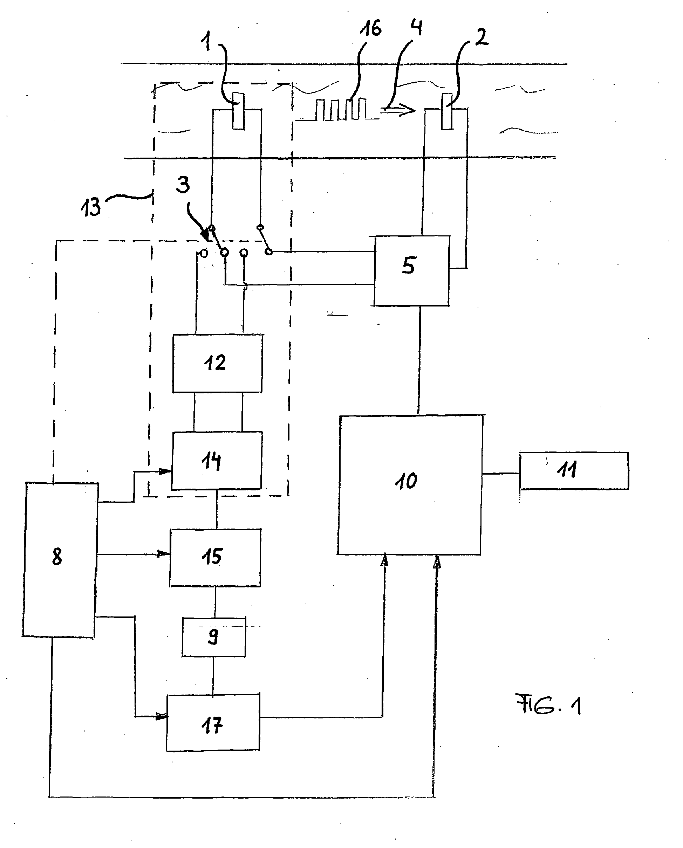

Die Bezugsziffern 1 und 2 in Fig. 1 bezeichnen jeweils einen piezoelektrischen Wandler. Die beiden Wandler 1, 2 legen die Messstrecke 4 fest und befinden sich im Medium, z. B. Wasser. Zur Laufzeitdifferenzermittlung wird vom Wandler 1 ein Ultraschallburst 16 ausgesendet, der die Messstrecke 4 durchläuft und vom Wandler 2 empfangen wird. Der entsprechende Vorgang wird auch gegenläufig vorgenommen. Zur Ermittlung der Strömungsgeschwindigkeit wird die Laufzeitdifferenz in der Einrichtung 5 ermittelt, in der Einrichtung 10 zur Durchfluss-/Volumenberechnung weiterverarbeitet und in der Anzeige 11 angezeigt.

Bezugsziffer 3 bezeichnet einen Schalter, mit dem der piezoelektrische Wandler 1 wechselweise von der die Laufzeitmessung betreffenden ersten Baugruppe auf eine zweite Baugruppe zur Bestimmung des temperaturabhängigen Resonanzverhaltens des Wandlers 1 aufgeschaltet. Diese zweite Baugruppe umfasst einen Oszillator 14, welcher den Wandler 1 zu Schwingungen anregt. Die Einrichtung 12 sorgt dafür, dass ein interessierender Resonanzbereich ausgewählt werden kann, so z.B. eine Nebenresonanz, insbesondere Radialresonanz. Im Bereich der Radialresonanz kann die sogenannte Serienresonanz oder die Parallelresonanz ausgewählt werden. Die Anregung des piezoelektrischen Wandlers 1 erfolgt somit nur in diesem ausgewählten Frequenzbereich.

Der Oszillator 14, die Einrichtung 12 zur Auswahl einer bestimmten Resonanzfrequenz sowie der Wandler 1 bilden insgesamt eine Oszillatorschaltung 13.

Die Auswertung der durch den Oszillator 14 angeregten Resonanzschwingung des Wandlers 1 erfolgt über eine Einrichtung 15 zur Bestimmung der Frequenz und/oder Periodendauer. Die diesbezüglichen Informationen können wiederum an eine Einrichtung 9 zur Ermittlung der Temperatur weitergegeben und gemeinsam mit dem Wert der Einrichtung 5 zur Laufzeitdifferenzmessung der Einrichtung zur Durchführung der Durchfluss- und/oder Volumenberechnung zugeführt werden, welche wiederum mit einer Anzeige 11 in Verbindung steht. Eine tatsächliche Ermittlung der Temperatur muss nicht unbedingt erfolgen. Es genügt, dass ein temperaturabhängiger Wert in die sich anschließende Laufzeitberechnung eingebracht wird. In der Einrichtung 17 erfolgt anschließend die Berechnung der tatsächlichen Schalllaufzeit unter Einbeziehung der Temperatur.

Die Taktung der jeweiligen Messmodi erfolgt durch eine Ablaufsteuerung 8, die mit dem Schalter 3, dem Oszillator 14, der Einrichtung 15 zur Bestimmung der Frequenz und/oder Periodendauer sowie der Einrichtung 9 zur Ermittlung der Temperatur in Verbindung steht. Überdies ist die Ablaufsteuerung 8 mit der Einrichtung zur Durchfluss-/Volumenberechnung vernetzt.

Mit der obigen Ausführungsform wird eine Schaltung realisiert, bei der der piezoelektrische Wandler 1 als das die Resonanzfrequenz bestimmende Element vorgesehen ist.

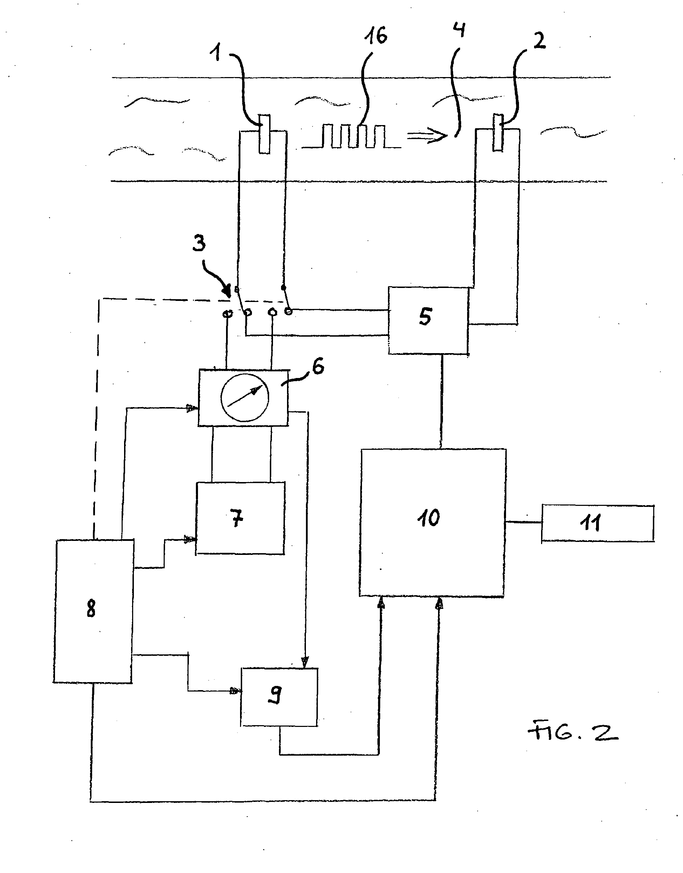

Fig. 2 zeigt eine Ausgestaltung der vorliegenden Erfindung, bei der anstelle eines Oszillators eine Sendeeinheit 7 zur Beaufschlagung des piezoelektrischen Wandlers 1 mit einer Frequenz, beispielsweise ein frequenzeinstellbarer Generator vorgesehen ist. Mittels der Sendeeinheit 7 können auf den Wandler 1 Frequenzen unterschiedlicher Höhe angelegt werden, wobei hierbei die Strom- und/oder Spannungscharakteristik des Wandlers 1, die abhängig ist von seiner Temperatur, zur Bestimmung der Temperatur des Mediums herangezogen wird.
Bei der hierdurch erfolgenden Zwangsanregung des piezoelektrischen Wandlers 1 mittels der Sendeeinheit 7 über einen Frequenzbereich, in dem sich die Resonanzpunkte der Parallelresonanz sowie Serienresonanz befinden, kann über die Einrichtung 6 zur Spannungs- und/oder Strommessung eine frequenzabhängige Spannungscharakteristik erfasst werden, die beispielsweise im Bereich ihres Maximums, d.h. dort, wo die gemessene Spannung bzw. Impedanz betragsmäßig am größten ist (Parallelresonanz), ausgewertet werden kann. Zusätzlich hierzu oder alternativ dazu kann auch die Stromphasenkurve in Abhängigkeit der Frequenz nach Lage und/oder Wert des Betragsminimums der elektrischen Impedanz (Serienresonanz) ausgewertet werden. Das Auswerteergebnis der Einrichtung 6 wird einer Einrichtung 9 zur Ermittlung der Temperatur zugeführt, deren Auswerteergebnis wiederum der Einrichtung 10 zur Durchfluss- und/oder Volumenberechnung zugeführt wird. Auch hierdurch wird eine temperaturabhängige Laufzeiterfassung realisiert.

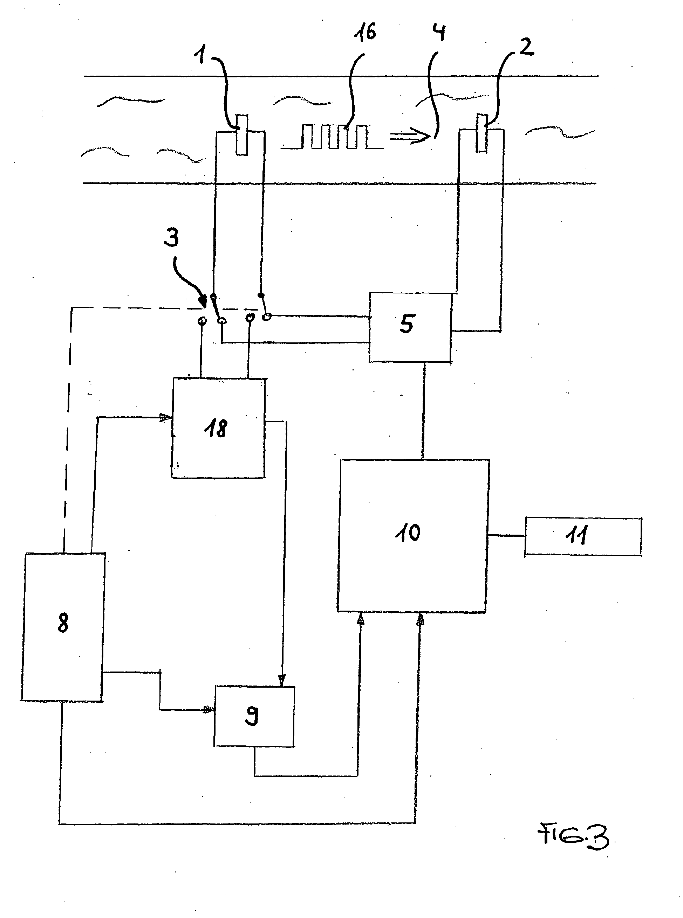

In der Darstellung gemäß Fig. 3 wird als zur Temperaturermittlung heranzuziehende physikalische Eigenschaft des piezoelektrischen Wandlers 1 nicht dessen Resonanzverhalten sondern dessen Kapazität in Abhängigkeit seiner Temperatur als Referenzgröße herangezogen. Auch die Kapazität des piezoelektrischen Wandlers ist nämlich abhängig von seiner Temperatur.

Hierzu ist eine Einrichtung 18 zur Erfassung der Kapazität des piezoelektrischen Wandlers 1 vorgesehen. Mit der Einrichtung 18 erfolgt eine Erfassung der Kapazität des piezoelektrischen Wandlers 1 nach entsprechender Aufladung durch in Fig. 3 im Einzelnen nicht dargestellte Bauteile und nach Aufschaltung des Wandlers 1 auf die Einrichtung 18 mittels des Schalters 3.

Der betreffende Kapazitätswert wird ebenfalls einer Einrichtung 9 zur Ermittlung der Temperatur zugeleitet bzw. ein entsprechender Wert zur temperaturabhängigen Berechnung der Schalllaufzeit generiert. Die Einrichtung 9 steht wiederum mit der Ablaufsteuerung 8, letztere mit der Einheit 10 zur Berechnung des Durchflusses und/oder Volumenstroms in Verbindung.

### BEZUGSZEICHENLISTE

- 1: Wandler
- 2: Wandler
- 3: Schalter
- 4: Messstrecke
- 5: Einheit zur Laufzeitdifferenzmessung
- 6: Einrichtung zur Spannungs- und Strommessung
- 7: Sendeeinheit für die Frequenz
- 8: Ablaufsteuerung
- 9: Einheit zur Ermittlung der Temperatur
- 10: Einheit zur Durchfluss- und/oder Volumenberechnung
- 11: Anzeige
- 12: Einrichtung zur Frequenzauswahl
- 13: Oszillatorschaltung
- 14: Oszillator
- 15: Einrichtung zur Bestimmung der Frequenz und/oder Periodendauer
- 16: Ultraschallburst
- 17: Einrichtung zur Berechnung der Schalllaufzeiten
- 18: Einrichtung zur Erfassung der Kapazität

## Patentansprüche

1. Verfahren zur Bestimmung einer Eigenschaft eines strömenden Mediums, insbesondere einer Flüssigkeit oder eines Gases wobei es sich bei der Eigenschaft insbesondere um den Durchfluss, das Volumen, die Konzentration, die Wärmemenge oder die Dichte handelt, unter Verwendung mindestens eines piezoelektrischen Wandlers,
**dadurch gekennzeichnet, dass**
aus der Temperaturabhängigkeit mindestens eines physikalischen Parameters des piezoelektrischen Wandlers die Temperatur des Mediums abgeleitet wird und der daraus abgeleitete Wert dem Verfahren zur Bestimmung der Eigenschaft des strömenden Mediums als Variable zugeführt wird.

2. Verfahren nach Anspruch 1,
**dadurch gekennzeichnet, dass**
die Aussendung und/oder der Empfang eines Ultraschallsignals zur Laufzeitdifferenzmessung und die Ableitung der Temperatur an demselben piezoelektrischen Wandler erfolgt.

3. Verfahren nach einem der Ansprüche 1 oder 2,
**dadurch gekennzeichnet, dass**
die Ableitung der Temperatur an mindestens zwei Ultraschallwandlern erfolgt und aus den Werten der Ultraschallwandler ein Temperaturwert abgeleitet wird.

4. Verfahren nach Anspruch 3,
**dadurch gekennzeichnet, dass**
die Häufigkeit der Temperaturerfassung geringer ist als die Häufigkeit des Empfangs oder Aussendens eines Ultraschallsignals zur Laufzeitmessung.

5. Verfahren nach Anspruch 3 oder 4,
**dadurch gekennzeichnet, dass**
die Häufigkeit des jeweiligen Messmodus (Temperaturmessung, Laufzeitmessung) veränderbar ist.

6. Verfahren nach einem der vorhergehenden Ansprüche,
**dadurch gekennzeichnet, dass**
als physikalischer Parameter das Resonanzverhalten des piezoelektrischen Wandlers erfasst und dessen Temperaturabhängigkeit ausgewertet wird.

7. Verfahren nach Anspruch 6,
**dadurch gekennzeichnet, dass**
mindestens eine der Nebenresonanzfrequenzen des piezoelektrischen Wandlers, insbesondere die Radialresonanzfrequenz, ausgewählt und deren Temperaturabhängigkeit ausgewertet wird.

8. Verfahren nach Anspruch 7,
**dadurch gekennzeichnet, dass**
als Radialresonanzfrequenz die Serienresonanz und/oder die Parallelresonanz ausgewertet wird.

9. Verfahren nach einem der vorhergehenden Ansprüche,
**dadurch gekennzeichnet, dass**
die elektrische Impedanz, insbesondere die Lage und/oder der Wert des Betragsminimums der elektrischen Impedanz oder die Lage und/oder der Wert des Betragsmaximums der elektrischen Impedanz ausgewertet wird.

10. Verfahren nach einem der vorhergehenden Ansprüche,
**dadurch gekennzeichnet, dass**
der Nulldurchgang der Phase der elektrischen Impedanz ausgewertet wird.

11. Verfahren nach einem der vorhergehenden Ansprüche,
**dadurch gekennzeichnet, dass**
die Frequenz der geringsten Stromamplitude ausgewertet wird.

12. Verfahren nach einem der vorhergehenden Ansprüche,
**dadurch gekennzeichnet, dass**
die Frequenz der geringsten Spannungsamplitude ausgewertet wird.

13. Verfahren nach einem der vorhergehenden Ansprüche,
**dadurch gekennzeichnet, dass**
der abgeleitete temperaturbezogene Wert zur Laufzeitermittlung des Ultraschallsignals herangezogen wird.

14. Verfahren nach einem der Ansprüche 1 - 5,
**dadurch gekennzeichnet, dass**
als physikalischer Parameter die Kapazität des piezoelektrischen Wandlers erfasst und dessen Temperaturabhängigkeit ausgewertet wird.

15. Ultraschallzähler zur Bestimmung des Durchflusses oder Volumens eines strömenden Mediums, insbesondere einer Flüssigkeit oder eines Gases, mit mindestens einem piezoelektrischen Wandler zur Laufzeitmessung,
**dadurch gekennzeichnet, dass**
der piezoelektrische Wandler (1 und/oder 2) als Mittel zur Bestimmung der Temperatur des Mediums dient.

16. Ultraschallzähler nach Anspruch 15,
**dadurch gekennzeichnet, dass**
der als Mittel zur Bestimmung der Temperatur dienende piezoelektrische Wandler (1 und/oder 2) sowohl mit einer ersten Baugruppe zur Laufzeitbestimmung als auch mit einer zweiten Baugruppe zur Bestimmung eines temperaturabhängigen physikalischen Parameters des piezoelektrischen Wandlers (1 und/oder 2) in Verbindung steht.

17. Vorrichtung nach einem der Ansprüche 15 oder 16,
**dadurch gekennzeichnet, dass**
als Teil der zweiten Baugruppe eine Einrichtung vorgesehen ist, die den piezoelektrischen Wandler (1 und/oder 2) zur Schwingung anregt, so dass dieser mit einer Frequenz schwingt.

18. Ultraschallzähler nach Anspruch 17,
**dadurch gekennzeichnet, dass**
ein Oszillatorschaltkreis (13) mit dem piezoelektrischen Wandler (1 und/oder 2) als Resonanzfrequenz bestimmendes Element vorgesehen ist.

19. Ultraschallzähler nach Anspruch 18,
**dadurch gekennzeichnet, dass**
der Oszillatorschaltkreis (13) eine Einrichtung (12) zur Auswahl einer Resonanzfrequenz vorgesehen ist.

20. Ultraschallzähler nach einem der Ansprüche 18 oder 19,
**dadurch gekennzeichnet, dass**
eine Einrichtung (15) zur Bestimmung der Frequenz und/oder Periodendauer vorgesehen ist.

21. Ultraschallzähler nach einem der Ansprüche 15 bis 17,
**dadurch gekennzeichnet, dass**
eine Frequenzsendeeinheit (7), insbesondere ein Frequenz-einstellbarer Generator enthält, mittels dem der Wandler (1 und/oder 2) mit mindestens einer Frequenz beaufschlagt wird.

22. Ultraschallzähler nach Anspruch 21,
**dadurch gekennzeichnet, dass**
die zweite Baugruppe eine Einrichtung (6) zur Messung der Spannung und/oder des Stroms am Wandler (1 und/oder 2) umfasst.

23. Ultraschallzähler nach Anspruch 15 oder 16,
**dadurch gekennzeichnet, dass**
die zweite Baugruppe als Mittel zur Bestimmung der Temperatur eine Einrichtung (18) zur Erfassung der Kapazität umfasst.

24. Ultraschallzähler nach einem der Ansprüche 14 - 23,
**dadurch gekennzeichnet, dass**
eine Schaltung vorgesehen ist, in der mehrere physikalische Parameter gemäß den Ansprüchen 14 - 23 auswertbar sind.

25. Ultraschallzähler nach einem der Ansprüche 14 - 24,
**dadurch gekennzeichnet, dass**
eine Einrichtung (9) zur Ermittlung der Temperatur aus der Auswertung des jeweiligen physikalischen Parameters vorgesehen ist.
